Europäisches Patentamt

European Patent Office

Office européen des brevets

(11) Numéro de publication: **0 438 006 A1**

# DEMANDE DE BREVET EUROPEEN

(21) Numéro de dépôt: 90420571.3

(22) Date de dépôt: 26.12.90

(51) Int. Cl.5: **A47C 7/18,** A47C 31/02,
A47C 7/20, A47C 7/14

(30) Priorité: 16.01.90 FR 9000761

(43) Date de publication de la demande:
24.07.91 Bulletin 91/30

(84) Etats contractants désignés:
AT BE CH DE DK ES FR GB GR IT LI LU NL SE

(71) Demandeur: SABLE SOCIETE ANONYME
Beaulieu
F-42230 Roche La Molière (Loire)(FR)

(72) Inventeur: Jay, Pierre André
16, boulevard Duguet
F-42600 Montbrison(FR)
Inventeur: Peyrot, Gilles
5, rue des Lupins
F-42600 Savigneux(FR)
Inventeur: Joannard, Jean
5, allée de Montplaisir
Moingt, F-42600 Montbrison(FR)

(74) Mandataire: Perrier, Jean-Pierre et al
Cabinet GERMAIN & MAUREAU 12 rue de la
République
F-42000 St-Etienne(FR)

(54) Garnissage en mousse pour siège avec inclusion de bandes d'accrochage et son procédé de fabrication.

(57) Ce garnissage est du type réalisé en mousse synthétique expansée et comportant sur au moins l'une de ses faces et pour sa fixation sur un support et pour la fixation sur lui d'une housse, des bandes d'accrochage à velours ou crochets liées à la mousse en même temps qu'une nappe poreuse à la résine.

Selon l'invention, la nappe (9), poreuse à la résine et associée à chaque bande d'accrochage, est réalisée en fibres et/ou fils synthétiques, souples et déformables, déborde largement au moins de la largeur de cette bande, affleure en (9a) la surface externe du garnissage dans laquelle elle est noyée, et forme en (9b), une armature anti-déchirure, en bordure de chacun des chants longitudinaux de cette bande et par sa partie de transition entre sa partie plaquée contre le verso de la bande et sa partie (9a) armant la face externe du garnissage.

FIG.4

## GARNISSAGE EN MOUSSE POUR SIÈGE AVEC INCLUSION DE BANDES D'ACCROCHAGE ET SON PROCÉDÉ DE FABRICATION".

Pour faciliter l'interchangeabilité des housses habillant les garnissages des coussins d'assise de dossier ou de têtière, dans divers types de siège, et par exemple dans les sièges pour transport collectif, il est connu de munir au moins la face postérieure ou inférieure du garnissage de bandes d'accrochage.

En général, ces bandes sont en velours à boucles ou crochets et comportent donc une nappe en crin synthétique de laquelle font saillies, d'un côté, les boucles ou crochets en crin synthétique et, de l'autre côté, un réseau de bouclettes en fils synthétiques. Lors de la fabrication du garnissage en mousse, chaque bande d'accrochage est positionnée par collage sur la paroi correspondante du moule avec son recto, présentant les boucles ou crochets, en vis à vis de cette paroi. Lors de l'expansion du mélange de résine synthétique dans le moule, la mousse s'insère à travers les bouclettes du verso de la bande d'accrochage et assure la liaison de celle-ci avec le garnissage en mousse.

Un tel mode de fixation est satisfaisant quant à la liaison moussebande de garnissage mais procure un inconvénient. En effet, les bords longitudinaux de la bande d'accrochage, inclus dans la mousse, créent localement des zones de moindre résistance qui, après de nombreux accrochages et décrochages, et dans les zones les plus flexibles, favorisent la formation de lignes de pliage et de rupture altérant d'abord la rigidité du garnissage, puis favorisant sa division par déchirage.

On connaît par EP 116357, un autre mode de fixation de la bande de garnissage dans la mousse consistant, à envelopper les lisières de cette bande par une couche de mousse formant un "C" d'accrochage. Dans une variante concernant une bande d'accrochage sans lisières, la bande est rendue solidaire d'une nappe complémentaire à grosses mailles remplaçant les lisières et assurant l'accrochage dans la mousse.

L'usage montre qu'en raison de son retrait à l'intérieur de la mousse, la nappe complémentaire ne peut pas s'opposer à la formation de déchirures, au ras des bords longitudinaux de la bande d'accrochage, bande qui peut ainsi être délaminée de la mousse du garnissage.

La présente invention a pour but de fournir un garnissage remédiant à de tels inconvénients.

A cet effet, dans le garnissage selon l'invention, la nappe associée à chaque bande d'accrochage est réalisée en fibres et/ou fils synthétiques, souples et déformables, déborde largement au moins de la largeur de celle-ci, affleure la surface externe de la mousse du garnissage dans laquelle elle est noyée et forme une armature anti-déchirure, en bordure de chacun des chants longitudinaux de cette bande et par sa partie de transition entre sa partie plaquée contre le verso de la bande et sa partie armant la face externe du garnissage.

Grâce à cela, la mousse est renforcée sur ses trois côtés entourant la nappe et ne peut plus se déchirer, même dans les zones de changement de niveau, correspondant aux bords longitudinaux de la bande. Il en résulte que, sans altérer la fixation de la bande avec la mousse, la nappe de renfort améliore la résistance dans le temps de la liaison et évite toute formation de zones de moindre résistance et de lignes de rupture.

Dans une forme d'exécution, la nappe de renfort est constituée par un treillis en fibres et fils synthétiques à mailles larges, indépendant de la bande et recouvrant au moins une bande.

Avec une telle bande d'accrochage, la mise en place des nappes de renfort dans le moule est simultanée à celle des bandes d'accrochage, ce qui ne modifie pas le procédé de fabrication.

L'invention concerne aussi un procédé de fabrication applicable à la réalisation de coussins d'assise, de dossier, de têtière ou autre rembourrage, comportant de nombreuses bandes d'accrochage, procédé du type mettant en oeuvre des bandes d'accrochage à lisières se positionnant et se fixant contre la paroi du moule au moyen de couches de produits adhésifs disposées sur le recto des lisières.

Ce procédé consiste, après positionnement par collage des lisières des bandes d'accrochage dans un moule en au moins deux parties, au moins une nappe de renfort qui, poreuse à la résine, en libres ou fils synthétiques, souples et déformables, est indépendante des bandes d'accrochage qu'elle recouvre avec débordement, à appliquer cette nappe contre la paroi du moule dans l'intervalle entre bandes, puis à injecter le mélange de résines porophore en utilisant la pression d'expansion pour maintenir la nappe plaquée contre la paroi du moule et pour lui faire épouser les bords longitudinaux des bandes d'accrochage.

Avec ce mode de mise en oeuvre, les bandes d'accrochage, du type couramment utilisé jusqu'à ce jour, sont renforcées par une ou plusieurs nappes positionnées sur la paroi du moule et recouvrant tout ou partie de cette paroi, tout en débordant largement autour des bandes. De cette manière, plusieurs bandes d'accrochage sont renforcées par une même nappe, ce qui améliore la résistance de la mousse dans les zones de fragilité entre bandes et au ras des bords longitudinaux de celles-ci.

D'autres caractéristiques et avantages ressortiront de la description qui suit en référence au dessin schématique annexé représentant à titre d'exemples non limitatifs, une forme d'exécution de la bande d'accrochage et quelques unes des phases de la mise en oeuvre du procédé de fabrication.

Figure 1 est une vue en perspective par l'arrière d'un garnissage de dossier,

Figure 2 est une vue en perspective montrant à échelle agrandie une forme de réalisation de la bande d'accrochage,

Figures 3 et 4 sont des vues de côté en coupe partielle montrant à échelle agrandie deux des phases du procédé de fabrication du garnissage à savoir après fermeture du moule et après expansion de la matière synthétique,

Figure 5 est une vue en perspective montrant la face inférieure d'une assise de siège,

Figure 6 en est une vue en coupe suivant VI-VI de figure 5.

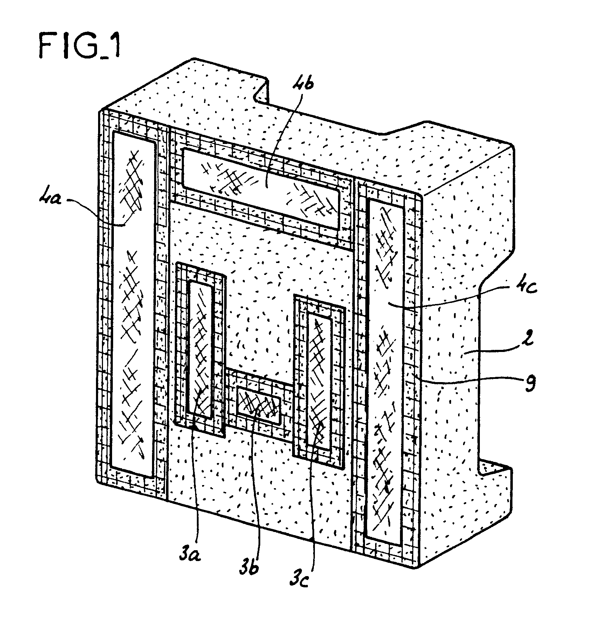

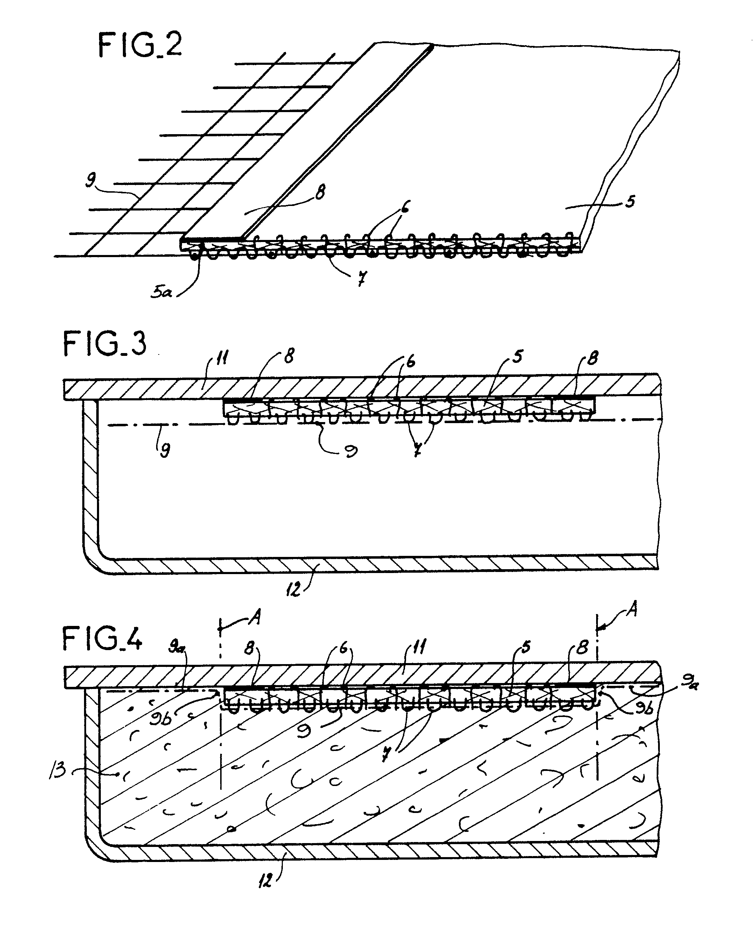

A la figure 1, 2 désigne un garnissage en mousse pour coussin de dossier. Ce garnissage comporte sur sa face postérieure, deux séries de bandes d'accrochage, à savoir une première série 3a, 3b, 3c pour sa fixation sur un support et une deuxième série 4a, 4b, 4c pour l'accrochage sur lui de la housse d'habillage du coussin.

Comme le montre la figure 2, chaque bande d'accrochage est composée, de façon connue, d'une nappe principale 5 en crins synthétiques, solidaire, sur son recto et entre les lisières 5a, de boucles ou crochets 6 en crin synthétique et, sur son verso, d'une nappe de bouclettes 7. De façon connue, et de part et d'autre des boucles ou crochets 6, les deux lisières Sa sont munies chacune d'une couche de produit adhésif 8 permettant de fixer la bande d'accrochage sur la paroi du moule, lors de la fabrication du garnissage.

Selon l'invention et comme le montre la figure 1, chaque bande d'accrochage est associée à une nappe de renfort désignée de façon générale par 9 et liée à elle et à la mousse. Cette nappe déborde au moins des bords longitudinaux de la bande, comme montré pour les bandes 4a, 4c et 3b. Elle peut aussi déborder des extrémités des bandes, comme montré pour les bandes 3a, 3c et 4b. Cette nappe de renfort 9 est perméable à la résine synthétique, c'est à dire est apte à être traversée par les molécules du mélange de résines synthétiques, lors de l'expansion de la mousse dans ce moule.

Dans une forme de réalisation, elle est constituée par un treillis de fils et/ou fibres en matière synthétique, tel que du polypropylène, ou en fibres de verre. Elle est souple et déformable pour pouvoir épouser le chant des bandes d'accrochage.

Dans une variante, elle est constituée par une résille tricotée en fibres synthétiques très souples.

Selon les formes d'exécution, la nappe de renfort 9 fait corps avec la bande d'accrochage ou est indépendante de celle-ci.

La figure 2 montre une forme d'exécution dans laquelle la nappe 9 fait corps avec la bande d'accrochage. Dans ce cas, cette nappe est liée à la bande d'accrochage lors de la réalisation de la nappe de bouclettes 7. La nappe 9 déborde latéralement de part et d'autre de la bande d'accrochage d'une valeur, au moins égale à la moitié de la largeur entre lisières de la bande, et au moins de l'ordre de 10 à 20 mm.

Dans une autre forme d'exécution, la nappe de renfort est indépendante de la bande de garnissage. Dans ces conditions et comme le montrent les figures 3 et 4, après mise en place de chaque bande de garnissage par collage au moyen des zones adhésives 8 contre l'une des parois du moule, et en l'occurrence contre son couvercle 11, et avant fermeture de ce couvercle sur le moule proprement dit 12, il est procédé à la mise en place de la nappe de renfort 9.

Il faut ici noter qu'une même nappe 9 peut s'étendre sur la totalité de la paroi ou seulement sur une partie de celle-ci mais, qu'en tout état de cause, une même nappe recouvre plusieurs bandes de garnissage.

Lors du positionnement manuel de la nappe 9, l'opérateur veille à la plaquer contre la paroi correspondante du moule.

Son positionnement est maintenu par accrochage avec les bouclettes du verso des bandes, ou par collage sur des zones pré-encollées dudit verso.

Après fermeture du moule et injection du mélange porophore, la résine en cours d'expansion plaque les parties de nappe 9a, figure 4, débordant des bandes, contre la paroi du moule tout en pénétrant à travers les mailles de cette nappe. Sous l'action de ce plaquage et comme montré figure 4, la partie de nappe 9b assurant la transition entre la partie 9a et la partie disposée contre le verso de la bande, est amenée à épouser le chant de la bande en formant une armature noyée dans la mousse 13.

Après démoulage, les parties 9a de la nappe, qui affleurent du garnissage, assurent sa protection mécanique contre les rayures et déchirures, et, en étant noyée dans ce garnissage, le renforce mécaniquement contre les déchirures consécutives aux pliages successifs. Les parties 9b, disposées dans les zones fragiles, représentées par le trait mixte à la figure 4, c'est à dire à proximité des chants des bandes d'accrochage, renforcent la mousse et empêchent son déchirage, quelles que soient les contraintes de pliage, de flexion ou d'arrachage exercées dans ces zones.

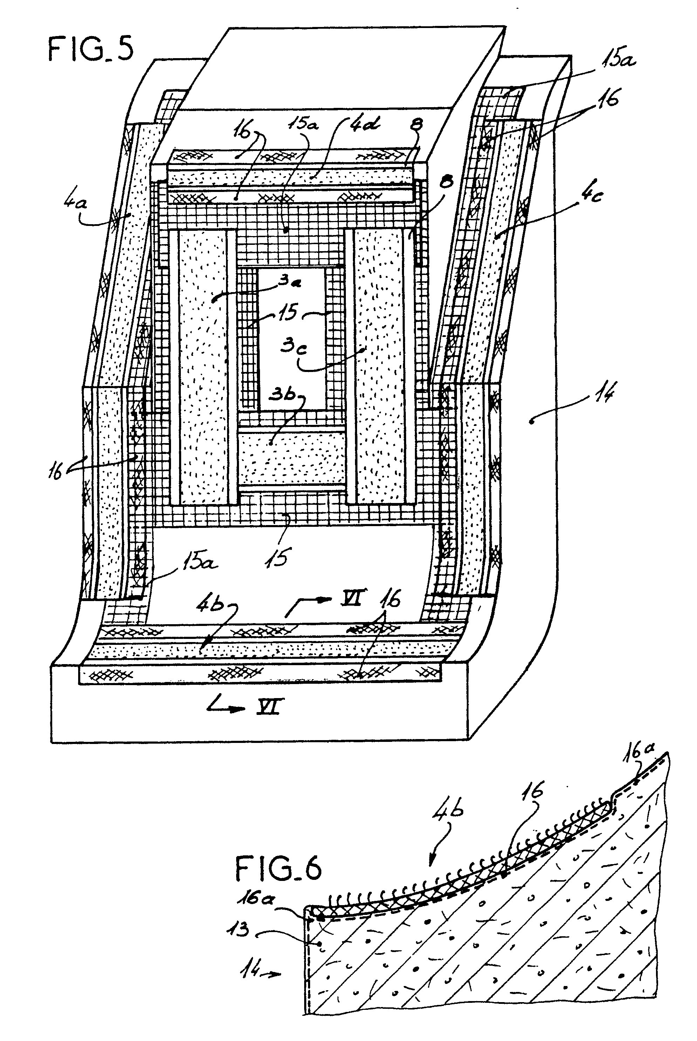

Le garnissage 14 pour le coussin d'assise, représenté à la figure 5, comporte en saillie de sa face inférieure, des bandes d'accrochage 3a, 3b, 3c pour sa fixation sur un support, et des bandes d'accrochage 4a à 4d pour la fixation sur lui d'une housse amovible. Les bandes d'accrochage 3a à 3c sont chacune associées à une nappe de renfort 15, qui est réalisée dans un treillis de fibres plates, tandis que les bandes d'accrochage 4a à 4d sont associées chacune à une nappe de renfort 16, réalisée dans une résille de fibres synthétiques tricotées. Bien que les nappes 15 et 16 débordent largement des bandes d'accrochage, des nappes complémentaires de renfort 15a, de même nature que les nappes 15, sont associées aux bandes 4a, 4c et 4d dans les zones de fragilité de la mousse, et dans les zones subissant des contraintes particulières.

La figure 5 met bien en évidence que la nappe 15 associée à la bande d'accrochage 3b, déborde largement de cette dernière tant en largeur qu'en longueur pour renforcer les extrémités longitudinales de bandes 3a-3c.

Le recours à une nappe de renfort 16 très souple, permet comme montré figure 6, de renforcer la bande d'accrochage 4a ou 4d, même lorsque celle-ci est disposée près d'un angle, et, en d'autres termes, permet donc de disposer de telles bandes au ras des angles, ce qui n'est pas le cas avec les autres moyens de renfort connus. Dans ces conditions, la partie 16a de la nappe qui affleure du garnissage dans l'angle de celui-ci assure également la protection de cet angle.

Il faut noter que dans toutes les formes d'exécution décrites ci-dessus, chaque bande d'accrochage, pouvant être à velours ou à crochets, est liée à la résine par la nappe de bouclettes 7 saillant de son verso et que la nappe de renfort 9, 15, 15a ou 16, n'intervient que de façon très secondaire sur sa fixation dans la mousse, car elle assure essentiellement un rôle de renfort contre les déchirures.

**Revendications**

1. Garnissage en mousse pour siège avec inclusion de bandes d'accrochage, du type réalisé en mousse synthétique expansée et comportant sur au moins l'une de ses faces et pour sa fixation sur un support et pour la fixation sur lui d'une housse, des bandes d'accrochage à velours ou crochets liées à la mousse en même temps qu'une nappe poreuse à la résine, caractérisé en ce que la nappe (9), poreuse à la résine et associée à chaque bande d'accrochage 3a- à 3c et 4a à 4d, est réalisée en fibres et/ou fils synthétiques, souples et déformables, déborde largement au moins de la largeur de cette bande, affleure en (9a) la surface externe du garnissage dans laquelle elle est noyée, et forme en (9b), une armature anti-déchirure, en bordure de chacun des chants longitudinaux de cette bande et par sa partie de transition entre sa partie plaquée contre le verso de la bande et sa partie (9a) armant la face externe du garnissage.

2. Garnissage selon la revendication 1, caractérisé en ce que la nappe de renfort (9) est rendue solidaire du verso muni de bouclettes (7) de la bande d'accrochage, lors de la réalisation de cette bande.

3. Garnissage selon la revendication 1, caractérisé en ce que la nappe perméable (9) est indépendante de la bande d'accrochage (3a à 3c et 4a-4c) à laquelle elle est associée.

4. Garnissage selon l'une quelconque des revendication 2 et 3, caractérisé en ce que les fils et fibres de la nappe (9) sont en polypropylène.

5. Procédé de fabrication d'un garnissage en mousse avec inclusion de bandes d'accrochage, caractérisé en ce qu'il consiste après positionnement et collage sur au moins l'une des parois d'un moule en deux parties (11) et (12) des lisières (5a) de bandes d'accrochage (3a à 3c) et (4a à 4d) présentant sur leur verso des moyens de liaison (7) avec la résine, à disposer, dans le moule et en vis à vis du verso des bandes d'accrochage, au moins une nappe (9-15-15a-16) qui, poreuse à la résine, en fibres ou fils synthétiques, souples et déformables, est indépendante des bandes d'accrochage (3a à 3c-4a à 4d) qu'elle recouvre avec débordement, à appliquer cette nappe contre la paroi du moule dans l'intervalle entre bandes, puis à injecter le mélange de résines porophore en utilisant la pression d'expansion pour maintenir la nappe (9-15-15a-16) plaquée contre la paroi du moule et pour lui faire épouser les bords longitudinaux des bandes d'accrochage.

FIG_1

## FIG.2

## FIG.3

## FIG.4

FIG.5

15a

16

16

15a

4d

B

4a

B

4c

3a

15

3c

3b

16

14

15

15a

4b

VI

16

VI

16a

16

4b

16a

FIG.6

13

14

**Office européen des brevets**

# RAPPORT DE RECHERCHE EUROPEENNE

Numéro de la demande

**EP 90 42 0571**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,Y | EP-A-0 116 357   (VAUTH &SOHN KG)<br>* page 5, ligne 22 - page 10, ligne 23; figures 1-8 * * page 11, ligne 22 - ligne 28 *<br>— — — | 1-3,5 | A 47<br>C 7/18<br>A 47 C 31/02<br>A 47 C 7/20<br>A 47 C 7/14 |
| Y | US-A-4 470 857   (CASALOU)<br>* colonne 3, ligne 4 - colonne 4, ligne 29; revendications 1-4; figures 1-3 *<br>— — — | 1-3,5 | |
| A | WO-A-8 603 164   (VELCRO USA INC)abrégé<br>* revendications 12,14; figures 8,9 *<br>— — — | 1-3,5 | |
| A | US-A-3 840 269   (AMBROSE)<br>* colonne 3, ligne 7 - ligne 10 *<br>— — — | 4 | |
| A | EP-A-0 138 724   (V.LOUISON ET CIE.)<br>* page 7, ligne 5 - page 8, ligne 6; revendications 10-12; figures 10-14 *<br>— — — — | 5 | |

**DOMAINES TECHNIQUES RECHERCHES (Int. Cl.5)**

A 47 C

Le présent rapport de recherche a été établi pour toutes les revendications

| Lieu de la recherche | Date d'achèvement de la recherche | Examinateur |
|---|---|---|
| La Haye | 15 avril 91 | MYSLIWETZ W.P. |